# EUROPEAN PATENT APPLICATION

(11) **EP 2 833 032 A1**
(43) Date of publication of application: **04.02.2015**
(21) Application number: 13178968.7
(22) Date of filing: 01.08.2013
(51) Int. Cl.: F16J 15/06, F01N 13/18

(54) **EGR seal with a sieve insert and manufacturing method**

(71) Applicant: ElringKlinger AG, 72581 Dettingen/Erms (DE)
(72) Inventor: Rodriguez Villaden, Juan Rafael, 43470 Selva del Camp (ES); Vega, Mariano, 43005 Tarragona (ES); Hedges, Derek James, Skelton, Saltburn by Sea, Cleveland TS12 2JP (GB); Attley, Lauren Elizabeth, Langley Moor, Dyfed DH7 8LT (GB)
(74) Representative: nospat Patent- und Rechtsanwälte GbR

(57) **Abstract**

The present invention relates to a seal with a sieve insert for an exhaust gas recirculation (EGR) in the exhaust line of a motor vehicle that is driven by an internal combustion engine. The invention also relates to a production method for an EGR seal of this kind with a sieve insert.

In order to achieve an improved sieve seal with a reduced pressure loss and to produce it by means of a corresponding production method, the invention proposes that the sieve seal (1) have a sieve element (4) with a three-dimensional embodiment in the form of an approximately cup-shaped curvature, which is affixed in the region of the sealing function.

## Description

The present invention relates to a seal with a sieve insert for an exhaust gas recirculation in the exhaust line of a motor vehicle that is driven by an internal combustion engine. The invention also relates to a production method for such an EGR seal with a sieve insert.

It is known from the prior art, among other things from DE 100 55 402 A1, to use sieve seals in transmissions in order to filter out coarse impurities from a hydraulic fluid. In exhaust gas recirculation, increasing use is being made of the low pressure circuit, with the exhaust being drawn from a point downstream of the soot particle filter. In order to prevent possible damage due to the entry, for example, of flaking ceramic particles from the combustion chambers of an internal combustion engine, a sieve seal is provided as a safeguard at a corresponding branch point of the exhaust line.

Sieves that have been used up to now for this purpose in the exhaust gas recirculation are characterized by means of a significant pressure loss. The object of the present invention, therefore, is to provide a remedy for this situation in the form of an improved sieve seal with reduced pressure loss and a corresponding production method.

This object is attained according to the invention by the features of claim 1 in that the sieve seal has a sieve part in the form of a sieve element with a three-dimensional design in the form of an approximately cup-shaped curvature, which is affixed in the region of the sealing function. The invention is thus based on the knowledge that the significant pressure loss of known sieve seals is largely caused by a comparatively low effective cross-sectional area. The integration of a sieve into a seal requires a cross-sectional leak-tightness relative to the outside and requires the assurance of the filter function in the region of the connection. The mechanical connection of the functional position and the sieve cloth ensures both functions. A three-dimensional design of the sieve increases the open cross-sectional area in comparison to known flat sieve elements and thus minimizes the pressure loss. The term "sieve cloth" is understood below to also mean knits or random layered structures such as fleeces, which all feature an outstanding heat resistance.

A corresponding production method is based on the fact that an element composed of sieve cloth with an edge that is carded in a radially outward direction is deformed and inserted into a sealing element provided with a closed collar, with the edge of the element composed of mesh cloth encompasses the collar of the sealing element in such a way that at least a part of the edge embraces the collar from behind. During a pressing procedure, a part of the edge and the collar are permanently connected to each other by folding or cramping so that a fluid can pass this arrangement only by traveling through the sieve element. Alternatively, a sieve element having said characteristics in operation is produced by deep drawing a region that is perforated by means of lasing, etching, or punching and is connected to the seal.

Advantageous modifications are the subject of the respective dependent claims. According to these, the sieve element is connected to a seal by means of a bead that is closed in the form of a ring or the connection of the seal to the sieve element is embodied by means of a transition of the seal into the sieve element, with the sieve element embodied in the form of a perforated or micro-perforated deep drawn component.

In a further embodiment, the cup-shaped sieve element can be conically or cylindrically shaped. Alternatively, the sieve element can be embodied as a cylindrical section that is closed at one free end, in particular by means of a circular piece of sieve cloth or by means of a compression and/or final closing of the sieve cloth by means of folding.

In a preferred embodiment of the invention, the permanent connection between the part of the edge of the seal and the collar of the sieve element is produced by means of crimping and/or bending. Alternatively, the sieve element is produced by deep drawing a region that is perforated by means of lasing, etching, or punching and is connected to the seal. This region that has been perforated in the preparatory steps can thus be composed of the material of the seal, which has not been cut out or punched out in a region through which subsequent flow will pass and therefore remains integrally and tightly joined to the seal.

Due to a cross-sectional leak-tightness that is significantly better by nature, instead of using a sieve cloth to produce a sieve element with a three-dimensional form, it is also possible to use a finely perforated sheet composed of metal or a heat resistant foil.

In the following, other features and advantages of embodiments according to the invention will be explained in greater detail with reference to exemplary embodiments shown in the drawings.

In the schematic depictions of the drawings:
- Fig. 1:: shows a detail of an exhaust gas recirculation, not shown in detail, in the exhaust line of a motor vehicle, in a sectional side view;
- Fig. 2:: is a sectional side view of another embodiment of a sieve seal;
- Figs. 3a - 3e:: show details of a sectional side view to illustrate a production of a connection between the sieve element and seal of another embodiment of a sieve seal;
- Figs. 4a und 4b:: show a depiction of a production method for a connection between the sieve element and seal of another embodiment of a sieve seal analogous to the sequence of Figs. 3a - 3e;
- Figs. 5a - 5d:: show various views of another embodiment of a sieve seal; and
- Figs. 6a - 6d:: show sectional side views of other embodiments of sieve seals with variation of a connecting region between the sieve element and the seal.

Throughout the various drawings and exemplary embodiments, the same reference numerals are always used for the same elements.

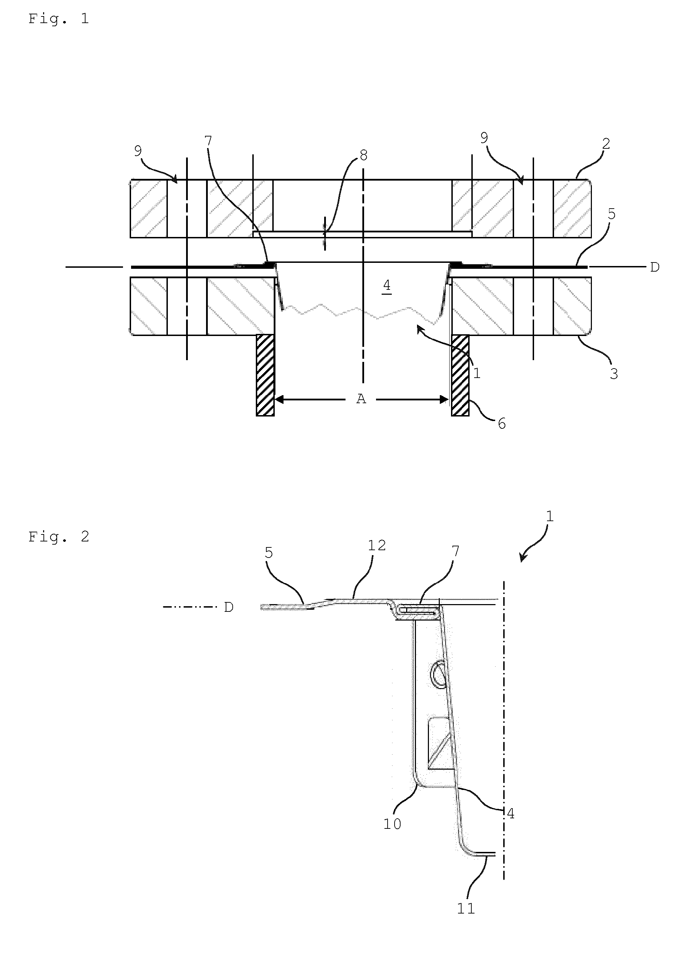

The sketch from Fig. 1 shows a detail of an exhaust gas recirculation, not shown in detail, in the exhaust line of a motor vehicle. In order to prevent a penetration of particles from the exhaust line via the exhaust gas recirculation e.g. into an internal combustion engine, a sieve seal 1 is provided in a plane D for the performance of a sealing function between a first flange 2 and a second flange 3. The sieve seal 1 has a sieve element 4, which is only indicated here, with a three-dimensional design that will be explained in greater detail below. The sieve element in the region of the sealing function is affixed to a seal 5 so that gases can travel via a full free cross-sectional area A of a pipe 6 adjoining the flange 3, through the sieve 4. The attachment of the sieve element 4 to the seal 5 is carried out, for example, by means of a folding that will be described in greater detail below, which forms a bead 7 that is closed into a ring shape. In order not to impair the sealing function, in this exemplary embodiment, a radial recess 8 is provided on the first flange 2. This recess 8 is dimensioned in order to accommodate the bead 7 so that when fixing the flanges 2, 3 by means of recesses 9, the seal 5 undergoes a full compression by means of them.

Fig. 2 shows another embodiment of a sieve element 4 in a sectional side view. The sieve element 4 extends from the bead 7, tapering essentially in the shape of a truncated cone, into an end region 11, which in this instance is circular and is composed of the same sieve material as the casing of the truncated cone-shaped remaining part of the sieve element 4.

The sieve seal 1 is a basically rotationally symmetrical component, which in the present embodiment, has external projections 10 of the seal 5 that deviate from this rotational symmetry. The seal 5 also has a circular, closed plate 12 extending concentrically around the bead 7.

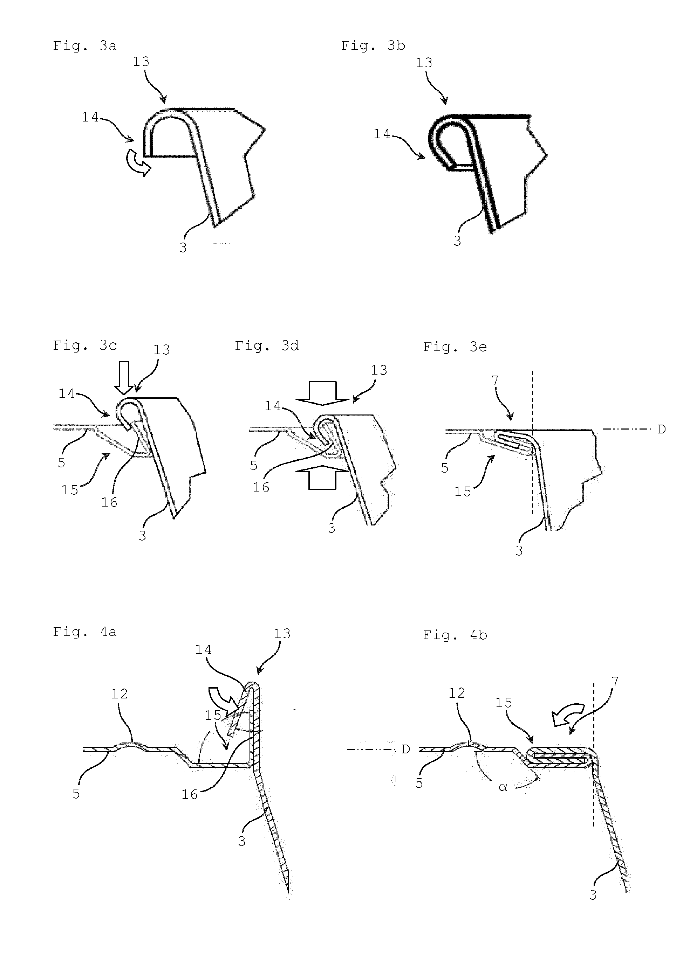

A method for producing a connection between the sieve element 4 and the seal 5 will be depicted in conjunction with the sequence of Figs 3a - 3e by means of details of a sectional side view of another embodiment of a sieve seal 1. In a first method step, a crimped-over edge 14 that extends radially outward is preformed onto the sieve element 4 at a free end region 13. Toward Fig. 3b, this edge 14 is being drawn so that it is further oriented inward. According to the sketch shown in Fig. 3c, the sieve element 4 is then inserted into the associated seal 5; the seal 5, which was essentially flat before with a circumferential swage 15 has been provided with a closed collar 16. The closed collar 16 of the seal 5 and the crimped-over edge 14 of the sieve element 4 are matched to each other so that the crimped-over edge partially embraces the collar 16 from behind. According to the depiction in Fig. 3c, the seal element is inserted so that the edge 14 of the element 4 composed of sieve cloth encompasses the collar 16 of the seal in such a way that at least part of the edge 14 embraces the collar 16 from behind and engages to a significant depth with the swage 15.

In Fig. 3d, the sieve element 4 is inserted into the seal 5 so completely that no further movement in the direction of the arrow in Fig. 3c is possible. As shown by the arrows facing in opposite directions in the depiction in Fig. 3d, a compression step now occurs. At the end of this step, the arrangement looks like the depiction shown in Fig. 3e: the seal 5 comes to an end in a remaining part of the swage 15 in which the bead 7 lies. Thanks to the sequence of parts of the seal 5 and sieve element 4 firmly joined to one another by folding, a fluid traveling through the sieve element 4 can flow through the arrangement on the other side of the dashed line. In the course of the final pressing procedure, therefore, a part of the edge 14 and of the collar 16 are permanently connected to each other by means of folding or cramping so that a fluid can pass through this arrangement only through the unoccupied part of the sieve element 4.

Figs. 4a and 4b show details of a sectional side view to illustrate a production of a connection between the sieve element 4 and the seal 5 of another embodiment of a sieve seal 1 analogous to the sequence of Figs. 3a - 3e. By contrast with the embodiment described above, the collar 16 adjoining the swage 15 of the seal 5 protrudes at approximately right angles, see Fig. 4a. The free end region 13 of the sieve element 4 comes to an end in a region extending approximately parallel to the collar 16 and ends at a crimped-over edge 14 extending radially outward, which embraces the collar 16 from above and behind. In a first step, this edge 14 is placed against the collar 16. This arrangement is then folded over by almost 90° and is placed flat into the swage 15, see Fig. 4b. An angle α indicates a slope of a flank at the transition from the seal 5 to the bead 7 that is formed in this way.

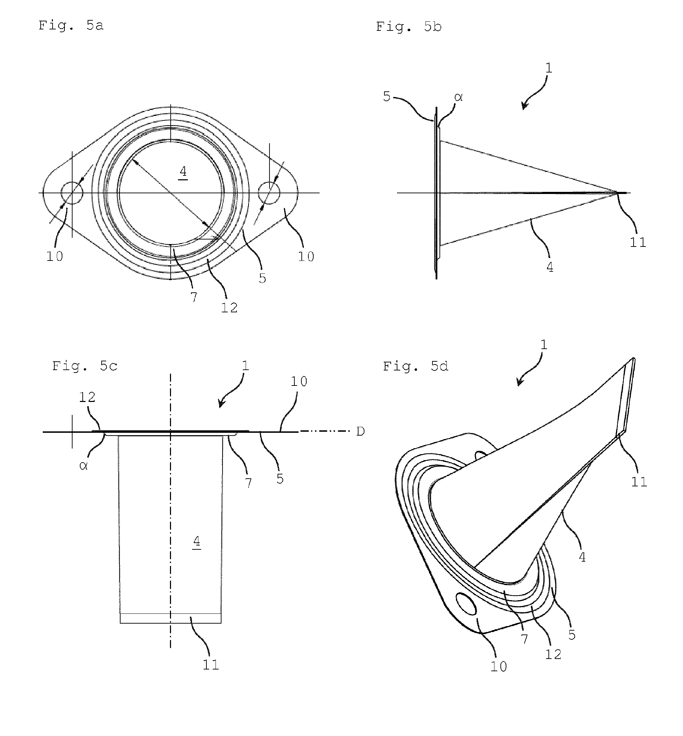

The sequence of Figs. 5a through 5d shows views of another embodiment of a sieve seal 1. This sieve seal 1 is axially symmetrical having two projections 10 situated on opposite sides, see Fig. 5a. Toward the sieve element 4, the projections 10 follow the seal 5 with a circularly enclosed plate 12 and the bead 7 as a connection between the seal 5 and the sieve element 4. The sieve element 4 tapers toward the end region 11 like a truncated cone, but in the end region 11, is compressed and closed in linear fashion, e.g. through folding, gluing, or welding.

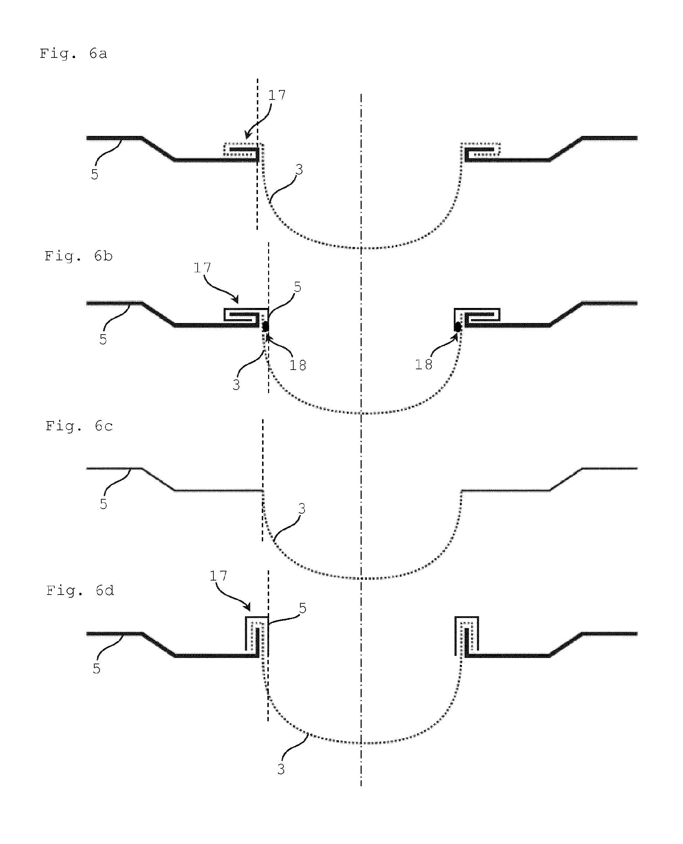

Figs. 6a - 6d show sectional side views of other embodiments of sieve seals 1. These embodiments differ with regard to the respective embodiment of the connecting region between the seal 5 and the sieve element 4; the exemplary embodiments described above essentially correspond to the sketch shown in Fig. 6a. For this reason, it is not addressed in further detail here. However, an important problem in sieve elements 4 composed of woven or braided fibers is to eliminate their lack of cross-sectional leak-tightness. In order to prevent leaks through the material of the sieve element 4 in the cross-sectional direction, the sieve element 4 together with a connection to the seal 5 must lie outside the region with the sealing function or must be enclosed by it in a sealed fashion.

In an alternative approach, the embodiment shown in Fig. 6b includes a clamping ring 17 that becomes part within the connection of the sieve element 4 to the seal 5. On the one hand, the clamping ring 17 is connected to the collar 16 of the seal 5 by means of folding and on the other hand, it is affixed to the edge 14 of the sieve element 4 so that it is welded to part of the collar 16. Consequently, a welding edge 18 constitutes a transition from the sieve element 4 to a region of high cross-sectional leak-tightness so that a flow through the sieve seal 1 is only possible through the sieve element 4 on the other side of the welding edge 18.

The embodiment according to Fig. 6d also includes the use of a clamping ring 17 with the design of the bead 7. The clamping ring 17, however, overlaps the approximately perpendicularly protruding closed collar 16 of the seal 5 against which is pressed the edge 14 of the sieve element 4, which is crimped-over in a radially outward direction, thus fixing the latter.

The embodiment of Fig. 6c, however, discloses a solution in which a closed collar 16 on the seal 5 is omitted. The sieve element 4 is produced by deep drawing a region that is connected to the seal 5 or it is made from the inner part of the seal 5 that usually is cut away. This region is perforated by means of lasing, etching, or punching especially in a separate step. Thus, the connection of the seal 5 to the end region 13 of the sieve element 4 is embodied by means of a transition of the seal 5 into the sieve element 4, with the sieve element 4 embodied in the form of a perforated or micro-perforated deep drawn component having a very high cross-sectional leak-tightness in comparison to every sieve cloth.

### Reference Numeral List

- 1: sieve seal
- 2: first flange
- 3: second flange
- 4: sieve element
- 5: seal
- 6: pipe
- 7: bead
- 8: recess in first flange 2
- 9: recess
- 10: projection
- 11: end region of the sieve element 4
- 12: circular closed plate
- 13: free end region of the sieve element 4
- 14: edge of the sieve element 4, crimped-over in a radially outward direction
- 15: swage in the seal 5
- 16: closed collar on the seal 5
- 17: clamping ring
- 18: welding edge
- 19 A: free cross-sectional area
- D: plane of the sealing function
- α: flank angle of the radially extending swage 15

## Claims

1. A seal with a sieve insert for an exhaust gas recirculation in the exhaust line of a motor vehicle that is driven by an internal combustion engine,
**characterized in that**
the sieve seal (1) has a sieve element (4) with a three-dimensional design in the form of an approximately cup-shaped curvature, which is fixed in the region of the sealing function.

2. The device according to the preceding claim, **characterized in that**
the sieve element (4) is connected to a seal (5) by means of a bead (7) that is closed in the form of a ring
or
the connection of a seal (5) to the sieve element (4) is embodied by means of a transition of the seal (5) into the sieve element (4), with the sieve element (4) embodied in the form of a perforated or micro-perforated deep drawn component.

3. The device according to the one of the preceding claims, **characterized in that** the seal (5) has at least one circularly closed plate (12) extending concentrically around the bead (7).

4. The device according to the preceding claim, **characterized in that** in the transition from the seal (5) to the bead (7), a flank extends at a slope angle (α).

5. The device according to the one of the preceding claims, **characterized in that** the sieve element (4) is symmetrically embodied and in particular, is conically or cylindrically embodied.

6. The device according to the one of the preceding claims, **characterized in that** the sieve element (4) is embodied as a cylindrical section that has an end region (11) adjoining a free end.

7. The device according to the preceding claim, **characterized in that** the sieve element (4) is closed by means of a circular piece of sieve cloth or through compression and/or folding of the sieve cloth.

8. The device according to the one of the preceding claims, **characterized in that** the seal (5) has external projections (10).

9. A method for producing a seal with a sieve insert for an exhaust gas recirculation in the exhaust line of a motor vehicle, **characterized in that** an element composed of sieve cloth with a three-dimensional design and an edge (14) that is crimped-over in a radially outward direction is preformed and
is inserted into a seal (5) provided with a closed collar (16);
the edge (14) of the sieve element (4) is inserted so that it overlaps the collar (16) of the seal element in such a way that at least part of the edge (14) embraces the collar (16) from behind and then, by means of a pressing procedure, a part of the edge (14) and of the collar (16) are permanently joined to each other by folding so that a fluid can pass through this sieve seal (1) only by passing through the sieve element (4)
or
the sieve element (4) is produced by means of deep drawing of a region that is connected to the seal (5) and is perforated by means of lasing, etching, or punching.

10. The method according to the preceding claim, **characterized in that** the permanent connection between the part of the edge (16) of the seal (5) and the collar (14) of the sieve element (4) is produced by means of pressing, crimping, and/or bending.
